Europäisches Patentamt

European Patent Office

Office européen des brevets

(19)

(11) Veröffentlichungsnummer: **0 279 190 B1**

(12) **EUROPÄISCHE PATENTSCHRIFT**

(45) Veröffentlichungstag der Patentschrift: **18.09.91**

(51) Int. Cl.⁵: **G01V 3/10, G01V 13/00**

(21) Anmeldenummer: **88100722.3**

(22) Anmeldetag: **20.01.88**

(54) **Induktives Suchgerät.**

(30) Priorität: **19.02.87 DE 3705308**

(43) Veröffentlichungstag der Anmeldung:
**24.08.88 Patentblatt  88/34**

(45) Bekanntmachung des Hinweises auf die
Patenterteilung:
**18.09.91 Patentblatt  91/38**

(84) Benannte Vertragsstaaten:
**DE FR GB SE**

(56) Entgegenhaltungen:
**DE-A- 1 448 353**
**GB-A- 575 573**
**US-A- 3 340 464**
**US-A- 3 764 860**

(73) Patentinhaber: **Institut Dr. Friedrich Förster**
**Prüfgerätebau GmbH & Co. KG**
**Postfach 1564 In Laisen 70**
**W-7410 Reutlingen 1(DE)**

(72) Erfinder: **Ausländer, Klaus, Dipl.-Ing. (FH)**
**Peter-Cornelius-Strasse 19**
**W-7410 Reutlingen(DE)**
Erfinder: **Patzwald, Wolfgang, Dipl.-Phys.**
**Gumpperweg 36**
**W-7410 Reutlingen(DE)**
Erfinder: **Fabris, Hans Jürgen, Dipl.-Ing. (FH)**
**Scheffelweg 29**
**W-7417 Pfullingen(DE)**
Erfinder: **Seichter, Helmut, Dr. Dipl.-Phys.**
**Elsterweg 112**
**W-7417 Pfullingen(DE)**

## Beschreibung

Die Erfindung betrifft ein induktives Suchgerät zum Aufsuchen von insbesondere metallischen Gegenständen gemäß dem Oberbegriff von Anspruch 1.

Derartige Suchgeräte sind seit langem in einer großen Vielfalt von Arten und Ausführungen bekannt (z.B. aus der DE-A-1448353). Sie dienen im allgemeinen zum Entdecken von unter dem Erdboden verborgenen metallischen Gegenständen. Man bedient sich dabei der Erscheinung, daß in vom magnetischen Wechselfeld der Suchspule erfaßten metallischen Gegenständen Wirbelströme induziert werden, die ihrerseits ein Gegenfeld aufbauen, das auf die Suchspule zurückwirkt. Die auf dieser Rückwirkung beruhenden Signale in der Empfängerwicklung werden ausgewertet und zur Anzeige gebracht. Die Signale weisen entsprechend den physikalischen Eigenschaften der Gegenstände, von denen sie hervorgerufen werden, charakteristische Unterschiede insbesondere bezüglich ihrer Phasenlage auf. Diese wird daher vielfach zum richtigen Einordnen der Art der entdeckten Gegenstände benützt. Dabei kann der Besitz eines Referenzphasenwinkels, der starr verknüpft ist mit der Phasenlage der Signale der gesuchten Gegenstände, von großer Bedeutung sein.

Häufig werden die Nutzsignale von Störsignalen überlagert, die dem Betrag nach größer sein können als die Signale aufzusuchender Gegenstände. Hier ist insbesondere der Erdboden von Bedeutung, der die Suchgegenstände umgibt. Dieser kann einerseits mineralische Bestandteile enthalten, die eine magnetische Permeabilität größer als eins besitzen. Man spricht dann von magnetisierbarem Erdboden, der einen zusätzlichen magnetischen Wechselfluß durch die Suchspule zur Folge hat und damit ein Signal in der letzteren bewirkt. Andererseits kann, insbesondere an Stränden, Salzwasser das die Suchgegenstände umgebende Medium sein. In diesem Zusammenhang spricht man von der Rückwirkung eines elektrisch schwach leitenden Mediums auf die Suchspule. Die beschriebenen Hintergrundeffekte haben interessanterweise Störsignale zur Folge, die in einem bestimmten Frequenzbereich aufeinander senkrecht stehen und zwar fallen die Signale von magnetisierbarem Erdboden in die 90°-Richtung und Signale von einem elektrisch schwach leitenden Medium etwa in die 0°-Richtung der Scheinwiderstandsebene. Sie stehen damit in einer festen Phasenbeziehung zu den Signalen der verschiedenen Suchgegenstände. Dieser Umstand kann nun benutzt werden, um Nutz und Störsignale voneinander zu trennen und die Auswirkung von Störsignalen auf das Sucherbgebnis zu unterdrücken. Entscheidend für die Wirksamkeit einer solchen Störsignalunterdrückung in einer nachgeschalteten Elektronik ist es, daß man dort über einen Referenzphasenwinkel verfügt, der starr ist in Bezug auf die Phasenlage der Störsignale, der also insbesondere nicht durch Phasendriften in den Erreger und Empfängerspulen oder in der Auswerteelektronik verändert wird.

Die Erfindung stellt sich demzufolge die Aufgabe, ein Suchgerät der eingangs definierten Art zu schaffen, das mit einem Referenzphasenwinkelgeber ausgerüstet ist, dessen Phasenwinkel starr verknüpft ist mit der Phasenlage der Signale, die in einer Suchspule von zu suchenden Gegenständen und/oder von die letzteren umgebenden störenden Medien hervorgerufen werden. Bei der Suche nach einer Lösung bot sich an, einen kleinen Ferritkörper in der Nähe der Suchspule anzubringen. Dies hätte jedoch ein Signal zur Folge, das sich nicht von den gleichfalls vorhandenen Nutz-und Störsignalen trennen läßt.

Die Lösung der oben genannten Aufgabe besteht in einem Suchgerät gemäß Anspruch 1.

Dabei ergibt sich ein Referenzphasenwinkel, der recht genau in der 0°-Richtung der Scheinwiderstandsebene liegt, also der Richtung, in die auch von elektrisch schwach leitenden Böden ausgelöste Signale fallen. Eine gute Trennung der Referenzsignale von allen überlagerten Signalen wird möglich durch Betätigen des in der Leiterschleife vorgesehenen Schalters. Gemäß einer Ausgestaltung der Erfindung erhält man eine besonders gute Möglichkeit zur Abtrennung der Signale durch periodisches Aus- und Einschalten der Leiterschleife. Weitere Ausgestaltungen der Erfindung sind in abhängigen Ansprüchen dargestellt.

Im folgenden soll die Erfindung anhand von Beispielen und durch Figuren näher erläutert werden. Es zeigen im einzelnen:

Figur 1 ein induktives Suchgerät mit Leiterschleife

Figur 2 ein solches mit zwei Teilschleifen

Figur 3 ein solches mit drei Teilschleifen.

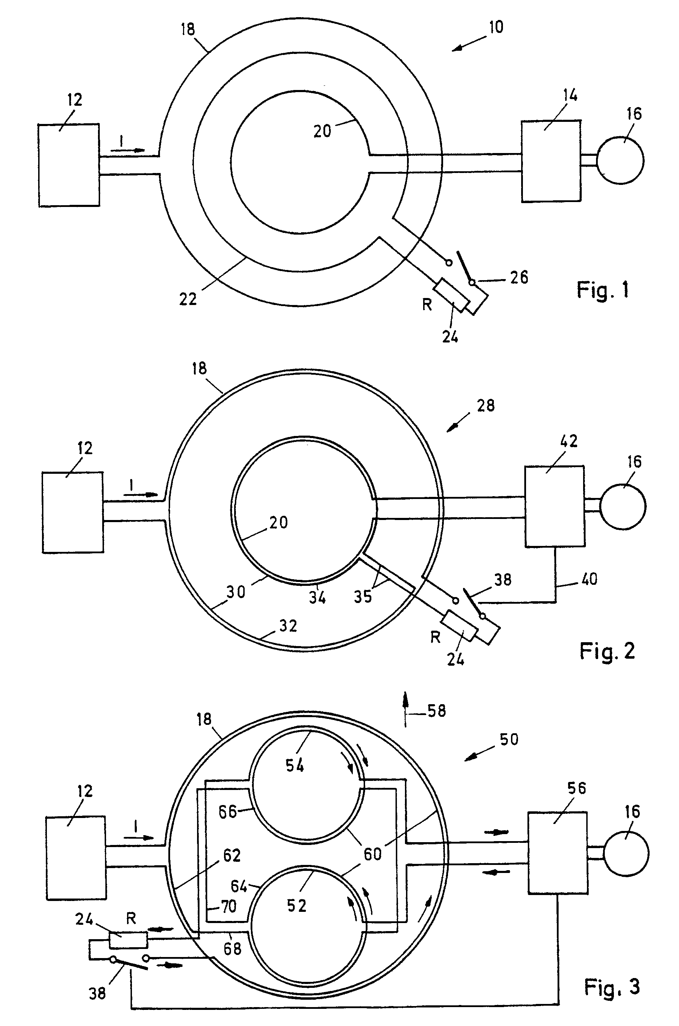

Das vereinfacht dargestellte Suchgerät nach Figur 1 besteht aus einer Suchspule 10, einer Wechselstromquelle 12 und einer Auswerteelektronik 14 mit Anzeigeorgan 16. Die Suchspule besitzt eine Erregerwicklung 18, die an den Ausgang der Wechselstromquelle 12 angeschlossen ist und eine Empfängerwicklung 20, die mit dem Eingang der Auswerteelektronik 14 verbunden ist. Mittel zur Kompensation des Dauersignales, das von der Erregerwicklung 18 in der Empfängerwicklung 20 induziert wird, sind im vorliegenden Fall ohne Bedeutung und daher nicht dargestellt. Solche Mittel, die den einschlägigen Fachleuten wohlbekannt sind, können beispielsweise in einer besonderen Kompensationswicklung oder in einer Differenzausführung der Empfängerwicklung (siehe Figur 3) bestehen, sie können aber auch nur rein elektronischer Art sein und einen Teil der Auswerteelektronik bilden. Im vorliegenden Beispiel sollen die Erregerwicklung 18 und die Empfängerwicklung 20 in einer Ebene liegen. Beide können in bekannter Weise eine Vielzahl von Windungen besitzen. Etwa in der Mitte zwischen den beiden Wicklungen ist eine Leiterschleife 22 angeordnet, die vorzugsweise nur eine Windung aufweist. Sie kann in Widerstandsdraht ausgeführt oder durch einen Widerstand 24 abgeschlossen sein. In jedem Fall soll ihr Ohmscher Gesamtwiderstand R einen Wert annehmen, der groß ist gegenüber dem Wert des induktiven Widerstandes $2\pi fL$ der Leiterschleife mit f als Frequenz des Wechselstromes J in der Erregerwicklung 18 und mit L als Induktivität der Leiterschleife. Im Stromkreis der Leiterschleife 22 ist ein Schalter 26 vorgesehen, mit dessen Hilfe die Leiterschleife kurzgeschlossen werden kann. Bei Betätigung des Schalters 26 induziert der Magnetfluß des Erregerstromes J in der Leiter(schleife einen Kurzschlußstrom, der seinerseits einen zusätzlichen Magnetfluß durch die Empfängerspule 20 zur Folge hat. Die dabei in der letzteren induzierte Spannung hat aufgrund der geknüpften Bedingungen einen Phasenwinkel, der recht genau in die $0^{\circ}$-Richtung der Scheinwiderstandsebene fällt. Die induzierte Spannung durchläuft alle einer Phasendrift unterworfenen Glieder der Auswerteelektronik 14 in der gleichen Weise wie die in der letzteren auszuwertenden Nutz und Störsignale. Die Phasenlage dieser Spannung kann infolgedessen als Referenzphasenwinkel in beliebiger Weise bei der Weiterverarbeitung der Nutzsignale oder zur Trennung der Nutzsignale von den Störsignalen herangezogen werden.

In Figur 2 ist ein weitgehend gleich aufgebautes Suchgerät dargestellt wie in Figur 1. Gleiche Bauteile sind daher mit den gleichen Bezugsnummern versehen wie dort. Suchspule 28 ist mit einer modifizierten Leiterschleife 30 ausgestattet. Diese besitzt zwei Teilschleifen 32, 34 mit unterschiedlichen Durchmessern, die über Verbindungsleitungen hintereinander geschaltet sind und die jeweils aus einer einzigen Windung bestehen. Teilschleife 32 ist besonders eng mit der Erregerwicklung 19 verkoppelt, indem man sie in deren mittelbarer Nähe angebracht hat, wo die Dichte der Erregerfeldlinien sehr groß ist. In gleicher Weise ist Teilschleife 34 besonders eng mit der Empfängerwicklung 20 verkoppelt, indem man sie in unmittelbarer Nähe zur letzteren angebracht hat. Ziel dieser Maßnahme ist es, die Referenzphasenwinkel so weit wie möglich frei von Fremdeinflüssen zu halten und dennoch eine ausreichend hoch über dem Rauschpegel liegende Spannung zu gewinnen. Ein Referenzphasenwinkel ungleich Null würde bedeuten, daß die Leiterschleife 30 eine nicht mehr vernachlässigbare Eigeninduktivität L besitzt. Bei Annäherung der Suchspule 10 an ein Medium mit magnetischer Permeabilität ungleich 1, also an sogenannten magnetisierbaren Erdboden, würde sich die Eigeninduktivität der Leiterschleife 30 merklich ändern. Dies hätte aber eine von außen kommende und damit nicht kontrollierbare Drehung des Referenzphasenwinkels zur Folge. Um Fremdeinflüsse auf die Phase klein zu halten, muß demnach der Widerstand bei gegebener unvermeidbarer Eigeninduktivität möglichst groß gehalten werden. Andererseits wird dadurch die von der Leiterschleife 30 in der Empfängerspule 20 verursachte Spannung klein. Um dem entgegenzuwirken, sollte die Kopplung zwischen Leiterschleife 30 und Erregerwicklung 18 einerseits sowie Leiterschleife 30 und Empfängerwicklung 20 andererseits so fest wie möglich sein, denn je fester die Kopplung der Leiterschleife 30 zur Erregerwicklung 18, um so größer der induzierte Strom in der Leiterschleife und je fester die Kopplung zur Empfängerspule 20, um so größer die dort induzierte Spannung. Eine Verstärkung der Kopplung durch eine Erhöhung der Anzahl der Leiterschleifenwindungen scheidet aus, da sich mit der Windungszahl die Eigeninduktivität der Leiterschleife quadratisch, die Gegeninduktivität zu Erreger und Empfängerwicklung nur linear erhöhen würde. Die Folgerung hieraus besteht darin, daß man in der oben beschriebenen Weise eine Aufteilung der Leiterschleife 30 in zwei Teilschleifen 32, 34 vornimmt, deren jede durch räumliche Annäherung und Anpassung an deren geometrische Form besonders starr mit einerseits der Erregerwicklung 18, andererseits der Empfängerwicklung 20 gekoppelt ist.

Das Suchgerät gemäß Figur 2 unterscheidet sich noch in einer anderen Hinsicht von dem nach Figur 1. Ein im Stromkreis der Leiterschleife 30 vorgesehener Schalter 38 ist als elektronischer Schalter ausgelegt, der über eine Steuerleitung 40 betätigt werden kann. Eine der in Figur 1 dargestellten Auswerteelektronik 14 weitgehend entsprechende Auswerteelektronik 42 mit Anzeigeorgan 16 besitzt zusätzlich einen Steuerkreis, durch den über Steuerleitung 40 Schalter 38 periodisch mit einer Steuerfrequenz $f_{St}$ geöffnet und geschlossen wird. Auf diese Weise steht das den Phasenreferenzwinkel repräsentierende Signal als mit der Steuerfrequenz $f_{St}$ moduliertes Signal zur Verfügung und kann als solches im Prinzip von allen übergelagerten Signalen getrennt werden. Dies könnte z. B. geschehen durch einen Bandpaß, dessen Mittenfrequenz auf die Steuerfrequenz $f_{St}$ abgestimmt ist.

Das in Figur 3 abgebildete Suchgerät besitzt eine Suchspule 50 mit zwei in Differenz geschalteten Empfängerwicklungen 52, 54. Es ist im übrigen gleich gestaltet wie das in Figur 2 abgebildete Suchgerät. Bei gleichen Bauteilen werden daher auch hier gleiche Bezugsnummern verwendet. Die beiden Empfängerwicklungen 52, 54 sind in jeweils gegenläufigem Wicklungssinn miteinander und mit dem Eingang einer Auswerteelektronik 56 verbunden. Durch einen in Bezug auf die Erregerwicklung 18 genau symmetrischen Aufbau der beiden Empfängerwicklungen 52, 54 heben sich die unmittelbar von der Erregerwicklung in den letzeren induzierten Signale am Eingang der Auswerteelektronik 56 heraus. Dies gilt indessen nicht für Signale, die aufgrund der Rückwirkung von metallischen Suchgegenständen hervorgerufen werden, über die die Suchspule 50 in Richtung von Pfeil 58 hinweggeführt wird. Da die von diesen herrührenden Signale zu unterschiedlichen Zeiten in den beiden Empfängerwicklungen 52, 54 wirksam werden, kommen sie in bekannter Weise voll zur Anzeige. Für eine solche Spulenanordnung ist nach Figur 3 eine Leiterschleife 60 vorgesehen, die drei getrennte Teilschleifen 62, 64, 66 umfaßt. Teilschleife 62 ist an die Form der Erregerwicklung 18 geometrisch angepaßt und in deren unmittelbarer Nähe angebracht. Die Teilschleifen 64, 66 sind jeweils an die Form der Empfängerwicklungen 52, 54 geometrisch angepaßt und in deren unmittelbarer Nähe angebracht. Untereinander sind die Teilschleifen 62, 64, 66 durch Leiterbrücken 68, 70 verbunden. Damit nun nicht die in den Empfängerwicklungen 52, 54 induzierten Phasenreferenzsignale sich auch herausheben, muß die Polung der Teilschleifen 64, 66 dem Wickelsinn der Empfängerwicklungen 52, 54 gemäß ausgeführt werden. Dies geschieht durch ein entsprechendes Anschließen der Leiterbrücke 70, mit deren Hilfe eine gegenphasige Polung der beiden Teilschleifen 64, 66 erreicht wird.

## Patentansprüche

1. Induktives Suchgerät zum Aufsuchen von insbesondere metallischen Gegenständen, mit einer Suchspule, die aus einer Erreger und mindestens einer Empfängerwicklung besteht, mit einer an die Erregerwicklung angeschlossenen Wechselstromquelle, die einen Wechselstrom in die Erregerwicklung einspeist, um ein die zu durchsuchenden Bereiche durchdringendes Magnetfeld aufzubauen, mit einer an die Empfängerwicklung angeschlossenen Auswerteelektronik, in der Signale ausgewertet und angezeigt werden, die in der Empfängerwicklung durch vom Magnetfeld erfaßte metallische Gegenstände induziert wurden, dadurch gekennzeichnet,

daß ein Referenzgeber (22, 24, 26; 30; 60) für einen solchen Phasenwinkel der Signale vorgesehen ist, der in einer festen Beziehung zu den Phasenwinkeln der Signale bestimmter Suchgegenstände und bestimmter Störhintergründe steht, daß der Referenzgeber (22, 24, 26; 30; 60) im wesentlichen aus in einer geschlossenen, im Bereich der Suchspule befindlichen Leiterschleife besteht (22, 30, 60), deren Ohmscher Widerstand R groß gegenüber ihrem induktiven Widerstand $2\pi fL$ ist, wobei f die Frequent des Wechselstroms in der Erregerwicklung und L die Induktivität der Leiterschleife bezeichnen, und daß ein Schalter (26, 38) vorgesehen ist, durch den die Leiterschleife (22, 30, 60) unterbrochen und geschlossen werden kann.

2. Suchgerät nach Anspruch 1, dadurch gekennzeichnet,

daß elektronische Mittel (40, 42) vorgesehen sind, durch die der Schalter (38) periodisch geöffnet und geschlossen wird.

3. Suchgerät nach einem der vorher genannten Ansprüche, dadurch gekennzeichnet,

daß die Leiterschleife (30; 60) aus je einer Teilschleife (32/34; 62/64, 66) für einerseits die Erregerwicklung (18) und für andererseits jede Empfängerwicklung (20; 52, 54) besteht, daß die Teilschleifen (32/34; 62/64, 66) mit den zugehörigen Wicklungen (18/20; 52, 54) durch räumliche Nähe und geometrische Anpassung optimal gekoppelt sind und daß alle Teilschleifen (32/34; 62/64, 66) hintereinander geschaltet sind.

4. Suchgerät nach Anspruch 3, dadurch gekennzeichnet,

daß die empfängerseitigen Teilschleifen (64, 66) in einer Polung hintereinander geschaltet sind, die dem Wickelsinn der zugehörigen Wicklungen entspricht.

5. Suchgerät nach einem der vorhergehenden Ansprüche, dadurch gekennzeichnet,

daß die Leiterschleife (22) bzw. jede ihrer Teilschleifen (32, 34; 62, 64, 66) aus nur je einer Windung bestehen.

## Claims

1. An inductive detection apparatus for detecting in particular metallic objects, with a detector coil comprising one energiser and at least one receiver winding, with an AC current source connected to the energiser winding and feeding an alternating current into the energiser winding, in order to build up a magnetic field penetrating the areas to be searched, with an electronic evaluation system connected to the receiver winding, in which there are evaluated and indicated signals which are induced in the receiver winding by metallic objects detected by the magnetic field, characterised in that there is provided a reference emitter (22,24,26; 30; 60) for a phase angle of the signals, said phase angle being in a fixed relationship to the phase angles of the signals from specific detected objects and from specific background interference, that the reference emitter (22,24,26; 30; 60) substantially comprises a closed conductor loop (22, 30, 60) located in the vicinity of the detection coil, the ohmic resistance R of said conductor loop being large in comparison to its inductive resistance $2\pi fL$, f indicating the frequency of the alternating current in the energiser winding, and L the inductivity of the conductor loop, and that a switch (26,38) is provided, by means of which the conductor loop (22, 30, 60) can be interrupted and closed.

2. A detection apparatus according to Claim 1, characterised in that electronic means (40,42) are provided, by means of which the switch (38) is periodically opened and closed.

3. A detection apparatus according to one of the foregoing Claims, characterised in that the conductor loop (30; 60) respectively comprises a part loop (32/34; 62/64, 66) on the one hand for the energiser winding (18) and on the other hand for each receiver winding (20; 52,54), that the part loops (32/34; 62/64,66) are optimally coupled to the associated winding (18/20; 52,54) by spatial proximity and geometric adaptation, and that all the part loops (32/34; 62/64,66) are incorporated one behind the other.

4. A detection apparatus according to Claim 3, characterised in that the part loops (64,66) on the receiving side are incorporated one behind the other at a polarity corresponding to the winding direction of the associated windings.

5. A detection apparatus according to one of the foregoing Claims, characterised in that the conductor loop (22) or each of its part loops (32,34; 62,64,66) each comprise only one winding.

**Revendications**

1. Appareil de détection inductif pour la détection d'objets notamment métalliques, comportant une bobine de détection qui est constituée d'un enroulement d'excitation et au moins d'un enroulement de réception, comportant une source de courant alternatif raccordée à l'enroulement d'excitation, laquelle source envoie un courant alternatif dans l'enroulement d'excitation, afin de constituer un champ magnétique traversant les zones à détecter, comportant un dispositif électronique d'exploitation raccordé à l'enroulement de réception, dans lequel sont exploités et affichés des signaux qui ont été induits dans l'enroulement de réception par des objets métalliques explorés par le champ magnétique, caractérisé en ce qu'il est prévu un transmetteur de référence (22, 24, 26 ; 30 ; 60) pour un angle de phase des signaux qui est dans un rapport fixe par rapport aux angles de phase des signaux d'objets à détecter déterminés et de parasites déterminés, en ce que le transmetteur de référence (22, 24, 26 ; 30 ; 60) est essentiellement constitué d'une boucle de conducteur (22, 30, 60) fermée, se trouvant dans la région de la bobine de détection, dont la résistance ohmique (R) est grande par rapport à sa résistance inductive ($2\pi fL$), f étant la fréquence du courant alternatif dans l'enroulement d'excitation et L l'inductivité de la boucle de conducteur, et en ce qu'il est prévu un interrupteur (26, 38) permettant d'interrompre et de fermer la boucle de conducteur (22, 30, 60).

2. Appareil de détection selon la revendication 1, caractérisé en ce qu'il est prévu des moyens électroniques (40, 42) permettant d'ouvrir et de fermer périodiquement l'interrupteur (38).

3. Appareil de détection selon l'une des revendications précédentes, caractérisé en ce que la boucle de conducteur (30 ; 60) est constituée d'une boucle partielle (32/34 ; 62/64, 66) pour l'enroulement d'excitation (18), d'une part, et pour chaque enroulement de réception (20 ; 52, 54), d'autre part, en ce que les boucles partielles (32/34 ; 62/64, 66) sont couplées de manière optimale aux enroulements (18/20 ; 52, 54) par rapprochement dans l'espace et adaptation géométrique et en ce que toutes les boucles partielles (32/34 ; 62/64, 66) sont montées les unes derrière les autres.

4. Appareil de détection selon la revendication 3, caractérisé en ce que les boucles partielles (64, 66) côté réception sont montées l'une derrière l'autre avec une polarité telle qu'elle correspond au sens d'enroulement des enroulements correspondants.

5. Appareil de détection selon l'une des revendications précédentes, caractérisé en ce que la boucle de conducteur (22) ou chacune de ses boucles partielles (32, 34 ; 62, 64, 66) ne sont constituées chacune que d'une spire.

Fig. 1

Fig. 2

Fig. 3